# EUROPEAN PATENT APPLICATION

(11) **EP 4 618 389 A1**
(43) Date of publication of application: **17.09.2025**
(21) Application number: 25163282.4
(22) Date of filing: 12.03.2025
(51) Int. Cl.: H02M 1/32, H02M 3/335

(54) **CIRCUIT CONTROL METHOD, DUAL-ACTIVE-BRIDGE INVERTER, AND POWER SYSTEM**

(30) Priority: 15.03.2024 CN 202410303261; 30.08.2024 CN 202411218500
(71) Applicant: Sungrow (Shanghai) Co., Ltd., Shanghai 201203 (CN)
(72) Inventor: LIU, Yongwei, Shanghai 201203 (CN); YANG, Fan, Shanghai 201203 (CN); KE, Shunchao, Shanghai 201203 (CN); CUI, Xiang, Shanghai 201203 (CN); LI, Guangzhen, Shanghai 201203 (CN); LI, Wei, Shanghai 201203 (CN); LI, Jiaoli, Shanghai 201203 (CN); WU, Chao, Shanghai 201203 (CN); LI, Yan, Shanghai 201203 (CN); XING, Hanghang, Shanghai 201203 (CN)
(74) Representative: DREISS Patentanwälte PartG mbB

(57) **Abstract**

Provided are a circuit control method, a dual-active-bridge inverter, and a power system, which belong to the field of power electronics technologies. The circuit control method includes: determining a target inner phase-shift angle of a primary active bridge in a dual-active-bridge circuit, the dual-active-bridge circuit further including a transformer electrically connected to the primary active bridge; and adjusting an inner phase-shift angle of the primary active bridge to the target inner phase-shift angle in response to a secondary voltage of the transformer being at a rising edge or a falling edge. During control of the primary active bridge, the inner phase-shift angle is adjusted at least once when the secondary voltage is at the rising edge and at least once when the secondary voltage is at the falling edge. With the circuit control method according to the present disclosure, cross-loading an inner phase-shift angle generates a positive bias magnet current component and a negative bias magnet current component, suppressing accumulation of a bias magnet current component in a single direction, and reducing bias magnet saturation of the transformer, such that it is not likely to be damaged under extreme operation conditions.

## Description

### CROSS-REFERENCE TO RELATED APPLICATION

This application is based on and claims priority to Chinese patent application No. 2024103032614 filed on March 6, 2024, the entire content of which is incorporated herein by reference.

### FIELD

The present disclosure belongs to the field of power electronics technologies, and more particularly, to a circuit control method, a dual-active-bridge inverter, and a power system.

### BACKGROUND

Dual Active Bridge (DAB) includes two active bridges and a transformer connected between the two active bridges. The Dual Active Bridge features a small number of switching devices, a wide range of soft switching, and a capability for bidirectional power transmission. A commonly used modulation method for DAB is extended phase-shift control, which offers two control degrees of freedom, namely an inner phase-shift angle and an outer phase-shift angle. By adjusting the inner phase-shift angle and the outer phase-shift angle in real time, a duty cycle of a primary voltage and a phase of a secondary voltage can be controlled, and then the given power transfer and voltage gain control can be realized. However, when operating under extreme operation conditions such as sudden load changes or variations in input and output voltages, DAB circuits are prone to damage issues.

### SUMMARY

The present disclosure aims to solve at least one of the technical problems in the related art. Therefore, the present disclosure provides a circuit control method, a dual-active-bridge inverter, and a power system. Cross-loading an inner phase-shift angle generates a positive bias magnet current component and a negative bias magnet current component, suppressing accumulation of a bias magnet current component in a single direction, and reducing bias magnet saturation of the transformer, which it is not likely to be damaged under extreme operation conditions.

In a first aspect, the present disclosure provides a circuit control method. The method includes: determining a target inner phase-shift angle of a primary active bridge in a dual-active-bridge circuit, the dual-active-bridge circuit further including a transformer electrically connected to the primary active bridge; and adjusting an inner phase-shift angle of the primary active bridge to the target inner phase-shift angle in response to a secondary voltage of the transformer being at a rising edge or a falling edge.

During control of the primary active bridge, the inner phase-shift angle is adjusted at least once when the secondary voltage is at the rising edge and at least once when the secondary voltage is at the falling edge.

With the circuit control method according to the present disclosure, when adjusting the inner phase-shift angle of the primary active bridge, the inner phase-shift angle is loaded at both the rising edge and the falling edge of the transformer's secondary voltage, which generates the positive bias magnet current component and the negative bias magnet current component by the transformer, suppressing the accumulation of the bias magnet current component in the single direction, and improving bias magnet saturation of the transformer caused by single-edge loading phase-shift angle modulation, which makes the transformer less prone to damage under extreme operation conditions.

According to one embodiment of the present disclosure, in two adjacent control cycles of the primary active bridge, an adjustment moment for the inner phase-shift angle in one of the two adjacent control cycles corresponds to the rising edge of the secondary voltage, and the adjustment moment for the inner phase-shift angle in the other of the two adjacent control cycles corresponds to the falling edge of the secondary voltage.

With the control method according to this embodiment, a bias magnet current is less likely to accumulate rapidly in one direction due to continuous loading through cross-loading the inner phase-shift angle based on the rising edge or the falling edge of the secondary voltage of the transformer in adjacent control cycles, thereby reducing the bias magnet saturation of the transformer.

According to one embodiment of the present disclosure, the adjusting the inner phase-shift angle of the primary active bridge to the target inner phase-shift angle in response to the secondary voltage of the transformer being at the rising edge or the falling edge includes: obtaining a historical edge state of the secondary voltage of the transformer corresponding to an adjustment history of the inner phase-shift angle of the primary active bridge; determining a current edge state based on the historical edge state; and adjusting the inner phase-shift angle of the primary active bridge to the target inner phase-shift angle in response to the secondary voltage of the transformer being in the current edge state.

According to an embodiment of the present disclosure, the determining the current edge state based on the historical edge state includes: determining an edge state opposite to an edge state corresponding to a last inner phase-shift angle adjustment of the primary active bridge as the current edge state, the edge state being the rising edge or the falling edge.

According to an embodiment of the present disclosure, the determining the current edge state based on the historical edge state includes: determining an edge state corresponding to a last inner phase-shift angle adjustment of the primary active bridge as a reference edge state, and determining a corresponding historical adjustment amount for adjusting the inner phase-shift angle of the primary edge active bridge at the reference edge state; and determining the current edge state based on a current adjustment amount corresponding to the target inner phase-shift angle, the historical adjustment amount, and the reference edge state, the edge state including the rising edge or the falling edge.

According to an embodiment of the present disclosure, the determining the current edge state based on the current adjustment amount corresponding to the target inner phase-shift angle, the historical adjustment amount, and the reference edge state includes: determining an edge state opposite to the reference edge state as the current edge state when a sum of the current adjustment amount corresponding to the target inner phase-shift angle and the historical adjustment amount is greater than or equal to a threshold; and determining an edge state same as the reference edge state as the current edge state when the sum of the current adjustment amount corresponding to the target inner phase-shift angle and the historical adjustment amount is smaller than the threshold.

In a second aspect, the present disclosure provides a circuit control method. The circuit control method includes: determining a target inner phase-shift angle of a primary active bridge in a dual-active-bridge circuit, the dual-active-bridge circuit further including a transformer electrically connected to the primary active bridge and a secondary active bridge; and adjusting, in response to a drive signal of an upper bridge arm of the secondary active bridge being at a rising edge or a falling edge, a phase difference between a drive signal of a left bridge arm of the primary active bridge and a drive signal of a right bridge arm of the primary active bridge to adjust an inner phase-shift angle of the primary active bridge to the target inner phase-shift angle.

During control of the primary active bridge, the inner phase-shift angle is adjusted at least once when the drive signal is at the rising edge and at least once when the drive signal is at the falling edge.

With the control method according to this embodiment, the bias magnet current is not likely to accumulate rapidly in one direction due to continuous loading through cross-loading inner phase-shift angle based on the rising edge or the falling edge of the drive signal for driving the upper bridge arm in the adjacent control cycles, thereby reducing the bias magnet saturation of the transformer and thus making the transformer less likely to be damaged under extreme operation conditions.

According to one embodiment of the present disclosure, the upper bridge arm includes a forward switch and a reverse switch connected to the forward switch, the forward switch having a conducting direction pointing from the transformer to a power grid, and the reverse switch having a conducting direction pointing from the power grid to the transformer.

The adjusting, in response to the drive signal of the upper bridge arm being at the rising edge or the falling edge, the inner phase-shift angle of the primary active bridge to the target inner phase-shift angle includes: adjusting the inner phase-shift angle of the primary active bridge to the target inner phase-shift angle when a voltage of the power grid is in a positive half-cycle and the forward switch is detected to switch from an off state to an on state or from the on state to the off state; and adjusting the inner phase-shift angle of the primary active bridge to the target inner phase-shift angle when the voltage of the power grid is in a negative half-cycle and the reverse switch is detected to switch from the off state to the on state or from the on state to the off state.

In a third aspect, the present disclosure provides a circuit control method. The circuit control method includes: determining, when a bias magnet current component of an inductor of a dual-active-bridge circuit is greater than or equal to a reference value, an accumulation direction of the bias magnet current component, the dual-active-bridge circuit further including a primary active bridge and a transformer that are connected to the inductor, and the transformer being electrically connected to a secondary active bridge; and adjusting a moment for an inner phase-shift angle adjustment of the primary active bridge to allow the bias magnet current component of the inductor to accumulate in a direction opposite to the accumulation direction.

The moment for the inner phase-shift angle adjustment of the primary active bridge includes a moment at which a secondary voltage of the transformer is at a rising edge and a moment at which the secondary voltage of the transformer is at a falling edge; or the moment for the inner phase-shift angle adjustment of the primary active bridge includes a moment at which a drive signal of an upper bridge arm of a secondary active bridge is at the rising edge or a moment at which the drive signal of the upper bridge arm of the secondary active bridge is at the falling edge.

With the control method according to this embodiment, the inner phase-shift angle is adjusted according to the bias magnet current component of the inductor, which can reduce accumulation of the bias magnet current component in one direction, thereby reducing the bias magnet saturation of the transformer.

According to one embodiment of the present disclosure, the moment for the inner phase-shift angle adjustment of the primary active bridge includes: the moment at which the secondary voltage of the transformer is at the rising edge and the moment at which the secondary voltage of the transformer is at the falling edge; or the moment at which the drive signal of the upper bridge arm is at the rising edge or the moment at which the drive signal of the upper bridge arm is at the falling edge.

In a fourth aspect, the present disclosure provides a dual-active-bridge inverter. The dual-active-bridge inverter includes a dual-active-bridge circuit; and a controller electrically connected to the dual-active-bridge circuit and configured to perform the circuit control method according to the foregoing.

With the dual-active-bridge inverter according to the present disclosure, loading the inner phase-shift angle generates the positive bias magnet current component and the negative bias magnet current component, suppressing the accumulation of the bias magnet current component in the single direction, and improving the bias magnet saturation of the transformer caused by single-edge loading phase-shift angle modulation, which makes the transformer less prone to damage under extreme operation conditions.

According to one embodiment of the present disclosure, the dual-active-bridge circuit includes the primary active bridge, a first inductor, the transformer, and the secondary active bridge which are electrically connected to each other in sequence. The primary active bridge is configured as a full bridge. The secondary active bridge is configured as a half bridge.

In a fifth aspect, the present disclosure provides a power system including the dual-active-bridge inverter according to the foregoing.

With the power system according to the present disclosure, loading the inner phase-shift angle generates the positive bias magnet current component and the negative bias magnet current component, which suppresses the accumulation of bias magnet current component in the single direction, and improves the bias magnet saturation of transformer caused by single-edge loading phase-shift angle modulation. In this way, the transformer can operate stably under extreme operation conditions.

According to one embodiment of the present disclosure, the dual-active-bridge inverter has an input side electrically connected to a power supply assembly, and an output side electrically connected to an alternating current power grid.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a circuit block diagram of a dual-active-bridge circuit according to an embodiment of the present disclosure.
FIG. 2 is a schematic structural diagram of a dual-active-bridge inverter according to an embodiment of the present disclosure.
FIG. 3 is a drive waveform diagram of extended phase-shift control according to an embodiment of the present disclosure.
FIG. 4 is a first flowchart of a circuit control method according to an embodiment of the present disclosure.
FIG. 5 is a schematic diagram showing inner phase-shift angle loading and bias magnet current variation according to an embodiment of the present disclosure.
FIG. 6 is a second flowchart of a circuit control method according to an embodiment of the present disclosure.
FIG. 7 is a third flowchart of a circuit control method according to an embodiment of the present disclosure.
FIG. 8 is a fourth flowchart of a circuit control method according to an embodiment of the present disclosure.
FIG. 9 is a circuit block diagram of a dual-active-bridge inverter according to an embodiment of the present disclosure.

### Reference characters of the accompanying drawings:

primary active bridge 100; secondary active bridge 200; controller 300; first to eighth switches S1~ S8; first to second inductors L1 ~L2; first to third capacitors C1~C3.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference characters. The embodiments described below with reference to the drawings are illustrative only, and are only intended to explain, rather than limiting, the embodiments of the present disclosure.

In the following description, a "circuit" refers to an electrically conductive loop composed of at least one element or sub-circuit through electrical connection or electromagnetic connection. When an element or the circuit is "coupled to" or "connected to" another element or "coupled" or "connected" between two nodes, it may be directly coupled or connected to another element or an intermediate element may be provided therebetween, and connection between the elements may be physical, logical, or a combination thereof. Conversely, when the element is "directly coupled to" or "directly connected to" another element, it means that no intermediate element is provided therebetween.

In the description, terms such as "first" and "second" are used to distinguish similar objects, rather than to describe a particular order or sequence. It should be understood that numerical descriptors used in this way may be interchangeable where appropriate, to enable the embodiments of the present disclosure described herein to be implemented in an order other than that illustrated or described herein. Also, objects distinguished by the terms such as "first" and "second" are usually objects of the same type. A quantity of the objects is not limited. For example, one or a plurality of first objects may be provided. In addition, "and/or" throughout the description and appended claims indicates at least one of the objects associated with "and/or". The character "/" generally indicates that the associated objects before and after the character are in an "or" relationship.

Further, the description with reference to the terms "one embodiment", "some embodiments", "illustrative embodiment", "an example", "a specific example", or "some examples", etc., means that specific features, structures, materials, or characteristics described in conjunction with the embodiment(s) or example(s) are included in at least one embodiment or example of the present disclosure. The schematic representation of the above phrases throughout this specification is not necessarily referring to the same embodiment or example. In addition, the particular features, structures, materials, or characteristics described may be combined in any suitable manner in any one or more embodiments or examples.

In Dual Active Bridge (DAB) under extended phase-shift control, an increase (or a decrease) in the inner phase-shift angle results in a change in an exciting current of the transformer in the positive (negative) half-cycle compared to a previous switching cycle.Due to asymmetry between a positive exciting current of the transformer and a negative exciting current of the transformer and inability to reset the magnetic flux, bias magnet occurs and accumulates, which can cause the bias magnet saturation of the transformer during sudden load changes, variations in input and output voltages, and related extreme operation conditions, and thus results in damage to a power circuit.

An embodiment of the present disclosure provides a dual-active-bridge inverter. The dual-active-bridge inverter includes a controller and a dual-active-bridge circuit. The controller is electrically connected to the dual-active-bridge circuit. The controller is configured to perform a control method to adopt extended phase-shift control to drive the dual-active-bridge circuit. In addition, an inner phase-shift angle is loaded at a rising edge of the secondary voltage of the transformer and a falling edge of the secondary voltage of the transformer, respectively, in such a manner that the transformer generates a positive bias magnet current component and a negative bias magnet current component, which suppresses accumulation of a bias magnet current component in a single direction, and improves bias magnet saturation of the transformer caused by single-edge loading phase-shift angle modulation.

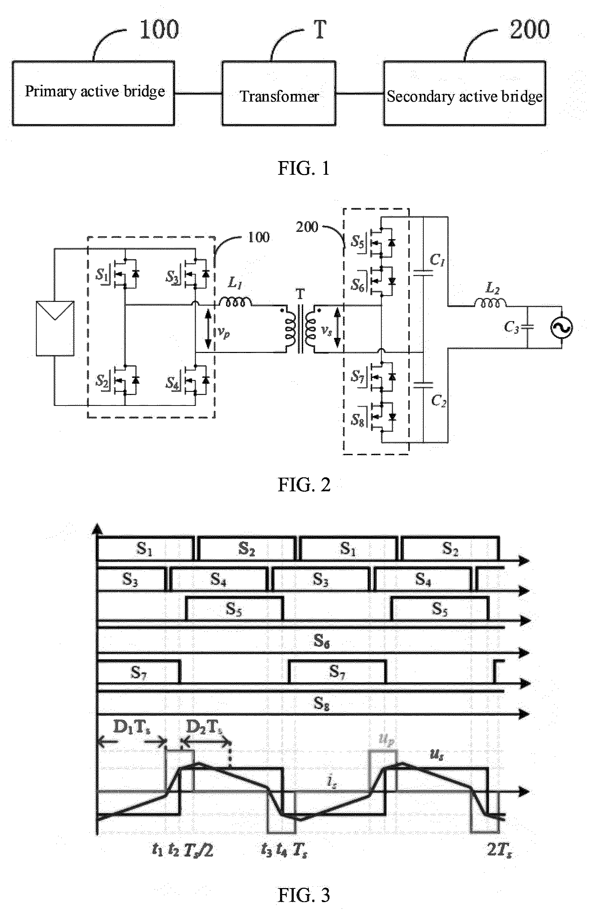

As illustrated in FIG.1, FIG. 1 is a circuit block diagram of a dual-active-bridge circuit. The dual-active-bridge circuit includes primary active bridge 100, a transformer T, and a secondary active bridge 200 that are electrically connected to each other in sequence. The primary active bridge 100 can be connected to a direct current power supply, and configured to convert a direct current into an alternating current to be supplied to a primary winding of the transformer T. The secondary active bridge 200 can be configured to convert an alternating current from a secondary winding of transformer T to a direct current which is supplied to a back-end circuit.

As illustrated in FIG.2, FIG. 2 is a circuit diagram of a dual-active-bridge micro-inverter. As one example, the dual-active-bridge circuit includes the primary active bridge 100, a first inductor L1, the transformer T, and the secondary active bridge 200 which are electrically connected to each other in sequence. The primary active bridge 100 is configured as a full bridge. The secondary active bridge 200 is configured as a half bridge.

The primary active bridge 100 includes a first switch S1, a second switch S2, a third switch S3, and a fourth switch S4. The secondary active bridge 200 includes a fifth switch S5, a sixth switch S6, a seventh switch S7, an eighth switch S8, a first capacitor C1, and a second capacitor C2.

A first electrode of the first switch S1 is electrically connected to a first electrode of the third switch S3, and a connection point between the first electrode of the first switch S1 and the first electrode of the third switch S3 is connected to a first power line. A second electrode of the first switch S1 is electrically connected to a first electrode of the second switch S2, and a connection point between the second electrode of the first switch S1 and the first electrode of the second switch S2 is electrically connected to a first terminal of the first inductor L1. A second terminal of the first inductor L1 is electrically connected to a first terminal of a primary winding of the transformer T. The second electrode of the third switch S3 is electrically connected to a first electrode of the fourth switch S4, and a connection point between the second electrode of the third switch S3 and the first electrode of the fourth switch S4 is electrically connected to a second terminal of the primary winding of the transformer T. A second electrode of the second switch S2 is electrically connected to a second electrode of the fourth switch S4, and a connection point between the second electrode of the second switch S2 and the second electrode of the fourth switch S4 is connected to a second power line. The first power line and the second power line are used for inputting or outputting power.

A first electrode of the fifth switch S5 is electrically connected to a first terminal of the first capacitor C1, and a connection point between the first electrode of the fifth switch S5 and the first terminal of the first capacitor C1 is connected to a third power line. A second electrode of the fifth switch S5 is electrically connected to a second electrode of the sixth switch S6. A first electrode of the sixth switch S6 and a first electrode of the seventh switch S7 are electrically connected to a first terminal of a secondary winding of the transformer T. A second electrode of the seventh switch S7 is electrically connected to a second electrode of the eighth switch S8. A first electrode of the eighth switch S8 is electrically connected to a first terminal of the second capacitor, and a connection point between the first electrode of the eighth switch S8 and the first terminal of the second capacitor is connected to a fourth power line. A second terminal of the first capacitor C1 is connected to a second terminal of the second capacitor C2, and a connection point between the second terminal of the first capacitor C1 and a second terminal of the second capacitor C2 is electrically connected to a second terminal of the secondary winding of the transformer T. The third power line and the fourth power line are used for inputting or outputting power. If the third power line and the fourth power line are used for outputting power, a second inductor L2 may be provided at the third power line, and a third capacitor C3 may be provided between the third power line and the fourth power line, to maintain output stability.

Each switch may be an Metal-Oxide-Semiconductor Field-Effect Transistor (MOS) tube or an Insulate-Gate Bipolar Transistor (IGBT) tube. When the switch is the MOS tube, the first electrode and the second electrode are a drain or a source, with a grid being electrically connected to the controller. When the switch is the IGBT tube, the first terminal and second terminal are a collector or an emitter electrode, with the grid being electrically connected to the controller.

As illustrated in FIG. 3, FIG. 3 is a drive waveform diagram of extended phase-shift control.When a voltage of a power grid is in the positive half-cycle, the drive signal of each switch is illustrated in FIG. 3. The first switch S1 and the second switch S2 are turned on alternately, the third switch S3 and the fourth switch S4 are turned on alternately, the fifth switch S5 and the seventh switch S7 are turned on alternately, and the sixth switch S6 and the eighth switch S8 remain continuously on. Up represents a primary voltage of the transformer T. When the first switch S1 and the fourth switch S4 are turned on, the Up voltage is a positive voltage. When the second switch S2 and the fourth switch S4 are turned on, the Up voltage is a negative voltage. An amplitude in both cases is equal to a power voltage. Us represents a secondary voltage of the transformer T. When the fifth switch S5 is turned on, the Us voltage is a positive voltage. When the seventh switch S7 is turned on, the Us voltage is a negative voltage, whose amplitude is equal to a product of Up and a turn ratio of the transformer. Is represents a current of the first inductor L1. When the first switch S1 is turned on, Is shows an increasing trend, and exhibits different slopes when the third switch S3 is turned on, when the fourth switch S4 is turned on, and when the fifth switch S5 is turned on. When the second switch S2 is turned on, Is shows a decreasing trend, and also exhibits different slopes when the fourth switch S4 is turned on, when the third switch S3 is turned on, and when the seventh switch S7 is turned on.

A commonly used modulation method for the dual-active-bridge inverter is extended phase-shift control, which offers two control degrees of freedom, namely an inner phase-shift angle D1 and an outer phase-shift angle D2. The inner phase-shift angle D1 is usually defined as an angle which is a negative rising edge of a primary square wave voltage offset from a positive rising edge of the primary square wave voltage. This angle can be represented by a signal phase difference (t1 to Ts/2) between a turn-off moment of the third switch S3 and a turn-off moment of the first switch S1. The outer phase-shift angle D2 is usually defined as an angle which is the primary voltage of the transformer offset from the secondary voltage of the transformer. This angle can be represented by a signal phase difference (t1 to t2) between the turn-off moment of the third switch S3 and a turn-off moment of the seventh switch S7. Through real-time adjustment for the D1 and D2, a duty cycle of the primary voltage Up and a phase of the primary voltage Up and the secondary voltage Us can be controlled, thereby achieving the given power transfer and voltage gain control.

To more clearly explain the circuit control method provided by the present disclosure, the above-described dual-active-bridge inverter is described below as an example.

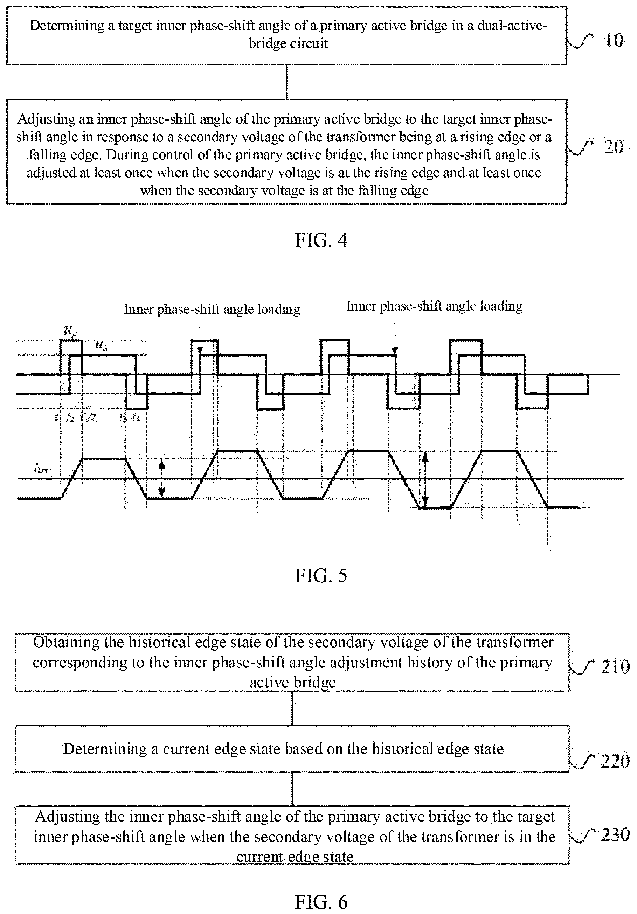

As illustrated in FIG. 4, FIG. 4 is a flowchart of a circuit control method. An embodiment of the present disclosure provides a circuit control method.

In this embodiment, the circuit control method includes Step 10 and Step 20.

Step 10: a target inner phase-shift angle of a primary active bridge 100 in a dual-active-bridge circuit is determined.

Step 20: an inner phase-shift angle of the primary active bridge is adjusted to the target inner phase-shift angle in response to a secondary voltage of the transformer being at a rising edge or a falling edge. During control of the primary active bridge, the inner phase-shift angle is adjusted at least once when the secondary voltage is at the rising edge and at least once when the secondary voltage is at the falling edge.

The circuit control method according to this embodiment is executed by the controller of the dual-active-bridge inverter described above, but it is needless to say that the circuit control method may be executed by other devices having similar functions, and thus details thereof will be omitted here.

It should be noted that during control of the dual-active-bridge circuit, according to actual operation conditions of the dual-active-bridge circuit, it is necessary to adjust the inner phase-shift angle of the primary active bridge 100 multiple times. Of course, an outer phase-shift angle between the primary active bridge 100 and the secondary active bridge 200 can also be adjusted. Taking each inner phase-shift angle adjustment as a control cycle, multiple control cycles occur during control of the dual-active-bridge circuit.

The target inner phase-shift angle refers to a desired inner phase-shift angle value for the primary active bridge 100 in each control cycle. If the target inner phase-shift angle differs from an inner phase-shift angle in a previous control cycle, the inner phase-shift angle of the primary active bridge 100 is required to be adjusted. The desired inner phase-shift angle value for the primary active bridge 100 in each control cycle can be determined by calculating a actual operating parameter of the dual-active-bridge circuit according to an established control strategy. For example, based on an actual power of the dual-active-bridge circuit, the inner phase-shift angle is adjusted to maintain the actual power above a target value. Alternatively, based on a minimum stress current of the dual-active-bridge circuit, the inner phase-shift angle is adjusted to maintain the power below the target value.

It should be noted that adjusting the inner phase-shift angle of the primary active bridge 100 to the target inner phase-shift angle in response to the secondary voltage of the transformer T being at the rising edge or the falling edge specifically refers to adjusting a duty cycle of the drive signal of the primary active bridge 100 corresponding to the rising edge or the falling edge in response to the secondary voltage of the transformer T being at the rising edge or the falling edge, to adjust the inner phase-shift angle. In the related art, a corresponding state of the secondary voltage when the inner phase-shift angle is adjusted is fixed (for example, fixed at the rising edge of the secondary voltage).

As illustrated in FIG. 3, the inner phase-shift angle can be represented as a phase difference between a falling edge of a turn-on signal of the first switch S1 and a falling edge of a turn-on signal of the third switch S3. By lengthening or shortening a duty cycle of the turn-on signal of the first switch S1, adjustment for the inner phase-shift angle can be realized. Taking the rising edge as an example, a corresponding drive signal is the turn-on signal of the first switch S1. Taking the falling edge as an example, a corresponding drive signal is the turn-on signal of the third switch S3. The inner phase-shift angle usually has an adjustment range from 0 to 0.5 (0 to 90°) . A specific adjustment value for each inner phase-shift angle adjustment can be set as desired. Optionally, a smaller step size can be used to adjust the inner phase-shift angle, in such a manner that an abrupt change of a current and a voltage in the dual-active-bridge circuit can be reduced, and then abnormal operation of the inverter caused by the abrupt change can be weakened.

It should be understood that a change in the inner phase-shift angle (an increase or a decrease) results in a change in an exciting current of the transformer T on a positive (negative) half-axis compared to the previous switch cycle. By adjusting the inner phase-shift angle in different directions, a change in the exciting current in different directions can occur. The change in the exciting current in different directions cancels each other out, thereby reducing bias magnet accumulation.

As illustrated in FIG. 5, FIG. 5 is a schematic diagram showing inner phase-shift angle loading and bias magnet current variation. Up represents a primary voltage of the transformer T. Us represents a primary voltage of the transformer T. i_{Lm} represents a bias magnet current of the first inductor L1. During a second control cycle, the inner phase-shift angle is loaded at the rising edge of the secondary voltage of the transformer T. In this case, an amplitude of the bias magnet current i_{Lm} on a positive half-axis is larger compared to the previous cycle, indicating one accumulation of the bias magnet current. During a third control cycle, the inner phase-shift angle is loaded at the falling edge of the secondary voltage of the transformer T. In this case, an amplitude of the bias magnet current i_{Lm} on a negative half-axis is larger compared to the previous cycle, indicating one accumulation of bias magnet current. However, the amplitude on the positive half-axis remains unchanged, which reduces accumulation of bias magnet current in one direction. Inner phase-shift angle loading refers to one inner phase-shift angle adjustment.

With the circuit control method according to the present disclosure, the extended phase-shift control is adopted for driving, and the inner phase-shift angle is loaded at the rising edge of the secondary voltage of the transformer T and at the falling edge of the secondary voltage of the transformer T, respectively. In this way, the transformer T can generate the positive bias magnet current component and the negative bias magnet current component, suppressing the accumulation of the bias magnet current component in the single direction, and improving the bias magnet saturation of the transformer caused by single-edge loading phase-shift angle modulation, which makes the transformer T less prone to damage under extreme operation conditions.

In some embodiments, there is at least one second control cycle between two adjacent first control cycles, or there is at least one first control cycle between two adjacent second control cycles.

It should be understood that bias magnet saturation of the transformer is more likely to occur when there is a significant accumulation of unidirectional bias magnet current component. Therefore, by providing the first control cycles and the second control cycles alternately, accumulation of the bias magnet current in one direction can be reduced, avoiding the bias magnet saturation of the transformer.

As an example, the first one, the second one, the fourth one, and the fifth one among five consecutive control cycles may be the first control cycle, and the third one among the five consecutive control cycles may be the second control cycle. Or, the first one, the second one, the fourth one, and the fifth one among five consecutive control cycles may be the second control cycle, and the third one among the five consecutive control cycles may be the first control cycle.

In some embodiments, in two adjacent control cycles of the primary active bridge 100, an adjustment moment for the inner phase-shift angle in one of the two adjacent control cycles corresponds to the rising edge of the secondary voltage, and the adjustment moment for the inner phase-shift angle in the other of the two adjacent control cycles corresponds to the falling edge of the secondary voltage.

In this embodiment, the inner phase-shift angle is loaded at the rising edge of the secondary voltage of the transformer in one control cycle, and the inner phase-shift angle is loaded at the falling edge of the secondary voltage of the transformer in a next control cycle. Alternatively, in one control cycle, the inner phase-shift angle is loaded at the falling edge of the secondary voltage of the transformer, and in the next control cycle, the inner phase-shift angle is loaded at the rising edge of the secondary voltage of the transformer. Therefore, the bias magnet current is less likely to rapidly accumulate in one direction due to continuous loading through cross-loading inner phase-shift angle based on the rising edge or the falling edge of the secondary voltage of the transformer in adjacent control cycles, thereby reducing the bias magnet saturation of the transformer.

As illustrated in FIG. 6, in some embodiments, a specific process of Step 20 may include Step 210, Step 220, and Step 230.

Step 210: a historical edge state of the secondary voltage of the transformer corresponding to an adjustment history of the inner phase-shift angle of the primary active bridge 100 is obtained.

Step 220: a current edge state is determined based on the historical edge state.

Step 230: the inner phase-shift angle of the primary active bridge 100 is adjusted to the target inner phase-shift angle in response to the secondary voltage of the transformer being in the current edge state.

In this embodiment, when the inner phase-shift angle is loaded in each control cycle, the controller can determine accumulation of bias magnet current of the transformer based on inner phase-shift angle adjustment information in a historical control cycle, thereby determining a loading position of the inner phase-shift angle in a current control cycle, which can better reduce the bias magnet saturation of the transformer.

In some embodiments, the determining the current edge state based on the historical edge state may include: determining an edge state opposite to an edge state corresponding to a last inner phase-shift angle adjustment of the primary active bridge 100 as the current edge state. The edge state is the rising edge or the falling edge.

As an example, if the inner phase-shift angle adjustment corresponds to the rising edge of the secondary voltage in the previous control cycle, the current edge state is the falling edge in the current control cycle. If the inner phase-shift angle adjustment corresponds to the falling edge of the secondary voltage in the previous control cycle, the current edge state is the rising edge in the current control cycle.

In other embodiments, the controller may further determine a loading position of the inner phase-shift angle within the current control cycle based on an adjustment amount of the inner phase-shift angle within the historical control cycle and an adjustment amount of the inner phase-shift angle within the current control cycle. The adjustment amount refers to a change value of the inner phase-shift angle.

With an increase in the adjustment amount of the inner phase-shift angle, an accumulation amount of the bias magnet current component of the inductor becomes larger. Therefore, based on a historical adjustment amount of the inner phase-shift angle within the historical control cycle and a current adjustment amount of the inner phase-shift angle within the current control cycle, accumulation of the bias magnet current component can be evaluated after adjustment of the inner phase-shift angle this time, and a corresponding edge state can be determined according to the accumulation. Therefore, the inner phase-shift angle can be adjusted using different edge states, and generated bias magnet current components can accumulate in different directions, thereby reducing accumulation of the bias magnet current component.

When the historical adjustment amount is determined, an edge state corresponding to a last inner phase-shift angle adjustment of the primary active bridge is determined as a reference edge state, and a corresponding historical adjustment amount for adjusting the inner phase-shift angle of the primary edge active bridge at the reference edge state is determined. For example, when the edge state corresponding to the last inner phase-shift angle adjustment of the primary active bridge is the rising edge, a sum of adjustment amounts of a target number of control cycles, within the historical control cycle, in which the inner phase-shift angle is adjusted at the rising edge is taken as the historical adjustment amount. The target number can be set as desired.

As an example, if a sum of the historical adjustment amount of the inner phase-shift angle within the historical control cycle and the current adjustment amount of the inner phase-shift angle within the current control cycle is greater than or equal to a threshold, an edge state corresponding to the inner phase-shift angle within the current control cycle is controlled to be opposite to (different from) an edge state corresponding to the inner phase-shift angle within the previous control cycle. Alternatively, if the sum of the historical adjustment amount of the inner phase-shift angle within the historical control cycle and the current adjustment amount of the inner phase-shift angle within the current control cycle is smaller than the threshold, the edge state corresponding to the inner phase-shift angle within the current control cycle is controlled to be the same as an edge state corresponding to the inner phase-shift angle within the previous control cycle.

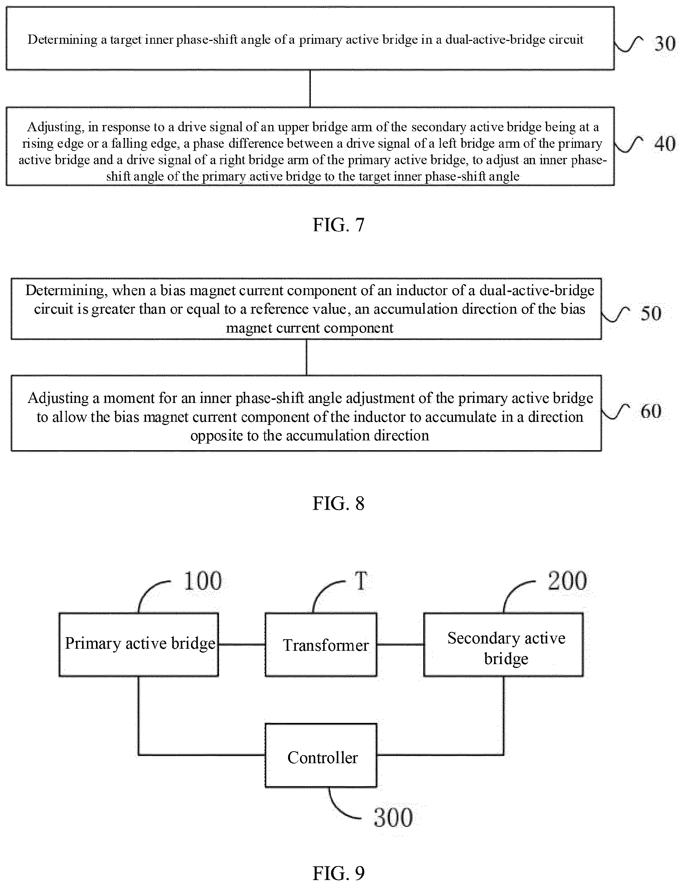

As illustrated in FIG. 7, FIG. 7 is a flowchart of a circuit control method. One embodiment of the present disclosure further provides a circuit control method, which is applied to the dual-active-bridge circuit. Reference to a specific structure of the dual-active-bridge circuit can be made to the above-mentioned embodiments. In this embodiment, the secondary active bridge 200 is connected to the power grid. The secondary active bridge 200 includes an upper bridge arm and a lower bridge arm. The circuit control method includes Step 30 and Step 40.

Step 30: a target inner phase-shift angle of a primary active bridge 100 in a dual-active-bridge circuit is determined.

Step 40: in response to a drive signal of the upper bridge arm of the secondary active bridge 200 being at a rising edge or a falling edge, a phase difference between a drive signal of a left bridge arm of the primary active bridge 100 and a drive signal of a right bridge arm of the primary active bridge 100 is adjusted, to adjust an inner phase-shift angle of the primary active bridge 100 to the target inner phase-shift angle.

During control of the primary active bridge, the inner phase-shift angle is adjusted at least once when the drive signal is at the rising edge and at least once when the drive signal is at the falling edge.

Taking the dual-active-bridge inverter illustrated in FIG. 2 as an example, the upper bridge arm refers to the fifth switch S5 and the sixth switch S6. The lower bridge arm refers to the seventh switch S7 and the eighth switch S8. One of the fifth switch S5 and the sixth switch S6 remains normally off for one control cycle, and the other of the fifth switch S5 and the sixth switch S6 performs a high-frequency on-off action. Similarly, one of the seventh switch S7 and the eighth switch S8 remains normally off for one control cycle, and the other of the seventh switch S7 and the eighth switch S8 performs the high-frequency on-off action.

The drive signal for driving the upper bridge arm refers to a signal that drives the fifth switch S5 or the sixth switch S6 to perform the on-off action. This signal can be a Pulse Width Modulation (PWM) signal or other forms of on-off control signals, which is not limited in the embodiments of the present disclosure. When the fifth switch S5 or the sixth switch S6 performs the on-off action, the rising edge of the drive signal means that the switch switches from the off state to the on state, and the secondary voltage of the transformer starts to rise. The falling edge of the drive signal means that the switch switches from the on state to the off state, and the secondary voltage of the transformer starts to drop.

As illustrated in FIG. 2 and FIG. 3, the left bridge arm of the primary active bridge100 refers to the first switch S1 and the second switch S2. The right bridge arm of the primary active bridge 100 refers to the third switch S3 and the fourth switch S4. The drive signal of the left bridge arm of the primary active bridge 100 and the drive signal of the right bridge arm of the drive signal of the primary active bridge 100 may be a phase difference between a drive signal of the first switch S1 and a drive signal of the fourth switch S4, or a phase difference between a drive signal of the second switch S2 and a drive signal of the third switch S3.

With the control method according to this embodiment, the bias magnet current is not likely to accumulate rapidly in one direction due to continuous loading through cross-loading the inner phase-shift angle based on the rising edge or the falling edge of the drive signal for driving the upper bridge arm in the adjacent control cycles, thereby reducing the bias magnet saturation of the transformer.

In some embodiments, the upper bridge arm includes a forward switch and a reverse switch connected to the forward switch. The forward switch has a conducting direction pointing from the transformer to a power grid. The reverse switch has a conducting direction pointing from the power grid to the transformer. The loading the inner phase-shift angle at the rising edge or the falling edge of the drive signal for driving the upper bridge arm includes: adjusting the inner phase-shift angle of the primary active bridge 100 to the target inner phase-shift angle when a voltage of the power grid is in a positive half-cycle and the forward switch is detected to switch from an off state to an on state or from the on state to the off state; and adjusting the inner phase-shift angle of the primary active bridge 100 to the target inner phase-shift angle when a voltage of the power grid is in a negative half-cycle and the forward switch is detected to switch from an off state to an on state or from the on state to the off state.

When the switch is truned on under control of a high-level drive signal is taken as an example. When the switch switches from the off state to the on state, the drive signal of the switch is at the rising edge. When the switch switches from the on state to the off state, the drive signal of the switch is at the falling edge.

Taking the dual-active-bridge inverter illustrated in FIG. 2 as an example, the forward switch refers to the fifth switch S5, the reverse switch refers to the sixth switch S6.

As one example, when the voltage of the power grid is in the positive half-cycle, the sixth switch S6 and the eighth switch S8 remain normally on, while the fifth switch S5 and the seventh switch S7 are turned on in a high-frequency complementary manner. After system startup stabilizes, in a k-th control cycle, the controller loads an inner phase-shift angle D1 based on a rising (or a falling) edge of the drive signal for the fifth switch S5; and in a (k+1)-th control cycle, the controller loads the phase-shift angle based on the falling (or the rising) edge of the drive signal for the fifth switch S5, and so on.

When the voltage of the power grid is in the negative half-cycle, the fifth switch S5 and the seventh switch S7 remain normally on, while the sixth switch S6 and the eighth switch S8 are turned on in a high-frequency complementary manner. After the system startup stabilizes, in the k-th control cycle, the controller loads the inner phase-shift angle D1 based on the rising (or the falling) edge of the drive signal for the sixth switch S6; and in the (k+1)-th control cycle, the controller loads the phase-shift angle based on the falling (or the rising) edge of the drive signal for the sixth switch S6, and so on.

As illustrated in FIG. 8, FIG. 8 is a flowchart of a circuit control method. One embodiment of the present disclosure further provides the circuit control method, which is applied to the dual-active-bridge circuit. Reference to a specific structure of the dual-active-bridge circuit can be made to the above-mentioned embodiments. In this embodiment, the circuit control method includes Step 50 and Step 60.

Step 50: when a bias magnet current component of an inductor of a dual-active-bridge circuit is greater than or equal to a reference value, an accumulation direction of the bias magnet current component is determined.

Step 70: a moment for an inner phase-shift angle adjustment of the primary active bridge is adjusted to allow the bias magnet current component of the inductor to accumulate in a direction opposite to the accumulation direction.

The moment for the inner phase-shift angle adjustment of the primary active bridge includes a moment at which a secondary voltage of the transformer is at a rising edge and a moment at which the secondary voltage of the transformer is at a falling edge. Or, the moment for the inner phase-shift angle adjustment of the primary active bridge includes a moment at which a drive signal of an upper bridge arm of a secondary active bridge is at the rising edge or a moment at which the drive signal of the upper bridge arm of the secondary active bridge is at the falling edge.

In the dual-active-bridge circuit, there are multiple methods to measure the bias current component of the inductor. For example, in one example, a current detection device can be disposed at the primary active bridge 100. This current detection device is electrically connected to the first inductor L1 to detect a current of the first inductor L1. The controller is connected to the current detection device and receives a detection signal thereof to obtain current information of the first inductor L1, and determines a magnitude of a bias magnet current component of the first inductor L1, that is, an accumulation direction, which can be illustrated in detail in FIG. 5. Of course, measurement of the bias magnet current component can also be realized in other methods. This embodiment of the present disclosure is not limited in this regard.

In this embodiment, the bias magnet current component of the inductor may refer to the bias magnet current component of the first inductor L1. The accumulation direction of the bias magnet current component includes a positive direction and a negative direction. If the accumulation direction is the positive direction, the moment for the inner phase-shift angle adjustment in the previous control cycle is the falling edge of the secondary voltage of the transformer. If the accumulation direction is the negative direction, the moment of the inner phase-shift angle adjustment in the previous control cycle is the rising edge of the secondary voltage of the transformer.

It should be understood that when the bias magnet current component of the first inductor L1 is greater than or equal to the reference value, the bias current component continuing to accumulate in the original accumulation direction may easily lead to the bias magnet saturation, which can subsequently damage the power circuit. Therefore, adjusting the accumulation direction of the bias magnet current component can reduce occurrence of the bias magnet saturation.

As illustrated in the aforementioned embodiments, the accumulation direction of the bias magnet current component is affected by a loading moment at which the inner phase-shift angle is adjusted. The loading moment refers to a moment at which the inner phase-shift angle adjustment is performed, which, generally, is a moment at which the drive signal in the current control cycle changes compared to the drive signal of the previous control cycle.

In some embodiments, the moment for the inner phase-shift angle adjustment of the primary active bridge includes: the moment at which the secondary voltage of the transformer is at the rising edge and the moment at which the secondary voltage of the transformer is at the falling edge. When the inner phase-shift angle is adjusted at the moment at which the secondary voltage of the transformer is at rising edge, the bias magnet current component accumulates in the positive direction. When the inner phase-shift angle is adjusted at the moment at which the secondary voltage of the transformer is at the falling edge, the bias magnet current component accumulates in the negative direction. If the accumulation direction of the bias magnet current component of the inductor of the dual-active-bridge circuit is detected to be positive, the moment for the inner phase-shift angle adjustment of the primary active bridge is adjusted from the moment at which the secondary voltage of the transformer is at the rising edge to the moment at which the secondary voltage of the transformer is at the falling edge. Therefore, by loading the inner phase-shift angle at the moment at which the secondary voltage of the transformer is at the falling edge, the bias magnet current component of the inductor can accumulate in the negative direction, reducing bias magnet saturation of the transformer.

In other embodiments, the moment for the inner phase-shift angle adjustment of the primary active bridge includes: the moment at which the drive signal of the upper bridge arm of the secondary active bridge is at the rising edge or the moment at which the drive signal of the upper bridge arm of the secondary active bridge is at the falling edge. When the inner phase-shift angle is adjusted at the moment at which the drive signal of the upper bridge arm of the secondary active bridge is at the rising edge, the bias magnet current component accumulates in the positive direction. When the inner phase-shift angle is adjusted at the moment at which the drive signal of the upper bridge arm of the secondary active bridge is at the falling edge, the bias magnet current component accumulates in the negative direction. If the accumulation direction of the bias magnet current component of the inductor of the dual-active-bridge circuit is detected to be positive, the moment for the inner phase-shift angle adjustment of the primary active bridge is adjusted from the moment at which the drive signal of the upper bridge arm of the secondary active bridge is at the rising edge to the moment at which the drive signal of the upper bridge arm of the secondary active bridge is at the falling edge. Therefore, by loading the inner phase-shift angle at the moment at which the drive signal of the upper bridge arm of the secondary active bridge is at the falling edge, the bias magnet current component of the inductor can accumulate in the negative direction, reducing the bias magnet saturation of the transformer.

With the control method according to this embodiment, by adjusting the inner phase-shift angle according to the bias magnet current component of the inductor, accumulation of the bias magnet current component in one direction can be reduced, thereby reducing the bias magnet saturation of the transformer, and thus making the transformer less likely to be damaged under the extreme operation conditions.

In some embodiments, the moment for the inner phase-shift angle adjustment of the primary active bridge 100 includes: the moment at which the secondary voltage of the transformer is at the rising edge and the moment at which the secondary voltage of the transformer is at the falling edge; or the moment at which the drive signal of the upper bridge arm is at the rising edge or the moment at which the drive signal of the upper bridge arm is at the falling edge.

The moment for the inner phase-shift angle adjustment may be an upper edge and a lower edge of the secondary voltage of the transformer or an upper edge and a lower edge of the drive signal of the upper bridge arm. For details of descriptions of each edge, reference can be made to the above-described embodiments. The present embodiment is not limited in this regard.

As an example, when the bias magnet current component of the inductor is greater than or equal to the reference value, if the accumulation direction of the bias magnet current component is the positive direction, the moment for the inner phase-shift angle adjustment is the falling edge of the secondary side voltage of the transformer in the previous control cycle, and the inner phase-shift angle is adjusted at the rising edge of the secondary voltage of the transformer in the current control cycle.

As another example, when the bias magnet current component of the inductor is greater than or equal to the reference value, if the accumulation direction of the bias magnet current component is the negative direction, in the previous control cycle, the moment for the inner phase-shift angle adjustment is the moment at which the drive signal of the upper bridge arm is at the rising edge, and in the current control cycle, the inner phase-shift angle is adjusted when the drive signal of the upper bridge arm is at the falling edge.

As illustrated in FIG. 9, FIG. 9 illustrates a dual-active-bridge inverter. An embodiment of the present disclosure further provides the dual-active-bridge inverter. The dual-active-bridge inverter includes: a dual-active-bridge circuit; and a controller 300 electrically connected to the dual-active-bridge circuit and configured to perform the above circuit control method.

The controller 300 can be connected to the switch in the primary active bridge 100 and the switch in the secondary active bridge 200, to control on or off of each switch. Reference to a specific structure of the dual-active-bridge inverter can be made to FIG. 3. Reference to an operating principle of the controller can be made to the above-mentioned embodiments, and thus details thereof will be omitted here.

In some embodiments, the dual-active-bridge circuit includes the primary active bridge 100, the first inductor L1, the transformer T, and the secondary active bridge 200 which are electrically connected to each other in sequence. The primary active bridge 100 is configured as the full bridge. The secondary active bridge 200 is configured as the half bridge.

With the dual-active-bridge inverter according to the present disclosure, loading the inner phase-shift angle generates the positive bias magnet current component and the negative bias magnet current component, which suppresses the accumulation of bias magnet current component in the single direction, and improves the bias magnet saturation of transformer caused by single-edge loading phase-shift angle modulation.

An embodiment of the present disclosure further provides a power system including the dual-active-bridge inverter according to the foregoing. Reference to a structure and a principle of the dual-active-bridge inverter can be made to the above embodiments. Details thereof will be omitted here.

With the power system according to the present disclosure, loading the inner phase-shift angle generates the positive bias magnet current component and the negative bias magnet current component, suppressing the accumulation of the bias magnet current component in the single direction, and improving the bias magnet saturation of the transformer caused by single-edge loading phase-shift angle modulation, which makes the transformer less prone to damage under extreme operation conditions.

In some embodiments, the dual-active-bridge inverter has an input side electrically connected to a power supply assembly, and an output side electrically connected to an alternating current power grid.

It should be understood that, due to significant variation in an instantaneous output voltage of the alternating current power grid over time, the dual-active-bridge inverter needs to accommodate an extremely wide voltage gain range. The dual-active-bridge inverter is equipped with the aforementioned control method. Even if operation conditions of the alternating current power grid are complex, a problem of the bias magnet saturation of the transformer is not likely to occur.

It should be noted that, in the present disclosure, terms "comprise", "include" or any other variations thereof are meant to cover non-exclusive including, such that the process, method, goods, or device including a series of elements do not only include those elements, but further include other elements that are not explicitly listed, or further include inherent elements of the process, method, goods, or device. In a case that there are no more restrictions, an element limited by the statement "comprises a ..." does not exclude the presence of additional identical elements in the process, method, goods, or device that includes the said element. In addition, it should be noted that a scope of the method and the apparatus described in the embodiments of the present disclosure is not limited to performing functions in the order shown or discussed. It can also include performing functions in a substantially simultaneous manner or in a reverse order, depending on the functions involved. For example, the method described can be performed in an order different from that described order, and steps can also be added, omitted, or combined as needed. In addition, the features described with reference to certain examples may be combined in other examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A circuit control method, comprising:
determining a target inner phase-shift angle of a primary active bridge in a dual-active-bridge circuit, the dual-active-bridge circuit further comprising a transformer electrically connected to the primary active bridge; and
adjusting an inner phase-shift angle of the primary active bridge to the target inner phase-shift angle in response to a secondary voltage of the transformer being at a rising edge or a falling edge,
wherein during control of the primary active bridge, the inner phase-shift angle is adjusted at least once when the secondary voltage is at the rising edge and at least once when the secondary voltage is at the falling edge.

2. The circuit control method according to claim 1, wherein said adjusting the inner phase-shift angle of the primary active bridge to the target inner phase-shift angle in response to the secondary voltage of the transformer being at the rising edge or the falling edge comprises:
obtaining a historical edge state of the secondary voltage of the transformer corresponding to an adjustment history of the inner phase-shift angle of the primary active bridge;
determining a current edge state based on the historical edge state; and
adjusting the inner phase-shift angle of the primary active bridge to the target inner phase-shift angle in response to the secondary voltage of the transformer being in the current edge state.

3. The circuit control method according to claim 2, wherein said determining the current edge state based on the historical edge state comprises:
determining an edge state opposite to an edge state corresponding to a last inner phase-shift angle adjustment of the primary active bridge as the current edge state, the edge state being the rising edge or the falling edge.

4. The circuit control method according to claim 2, wherein said determining the current edge state based on the historical edge state comprises:
determining an edge state corresponding to a last inner phase-shift angle adjustment of the primary active bridge as a reference edge state, and determining a corresponding historical adjustment amount for adjusting the inner phase-shift angle of the primary edge active bridge at the reference edge state; and
determining the current edge state based on a current adjustment amount corresponding to the target inner phase-shift angle, the historical adjustment amount, and the reference edge state, the edge state comprising the rising edge or the falling edge.

5. The circuit control method according to claim 4, wherein said determining the current edge state based on the current adjustment amount corresponding to the target inner phase-shift angle, the historical adjustment amount, and the reference edge state comprises:
determining an edge state opposite to the reference edge state as the current edge state when a sum of the current adjustment amount corresponding to the target inner phase-shift angle and the historical adjustment amount is greater than or equal to a threshold; and
determining an edge state same as the reference edge state as the current edge state when the sum of the current adjustment amount corresponding to the target inner phase-shift angle and the historical adjustment amount is smaller than the threshold.

6. The circuit control method according to any one of claims 1 to 5, wherein in two adjacent control cycles of the primary active bridge, an adjustment moment for the inner phase-shift angle in one of the two adjacent control cycles corresponds to the rising edge of the secondary voltage, and the adjustment moment for the inner phase-shift angle in the other of the two adjacent control cycles corresponds to the falling edge of the secondary voltage.

7. A circuit control method, comprising:
determining a target inner phase-shift angle of a primary active bridge in a dual-active-bridge circuit, the dual-active-bridge circuit further comprising a transformer electrically connected to the primary active bridge and a secondary active bridge; and
adjusting, in response to a drive signal of an upper bridge arm of the secondary active bridge being at a rising edge or a falling edge, a phase difference between a drive signal of a left bridge arm of the primary active bridge and a drive signal of a right bridge arm of the primary active bridge, to adjust an inner phase-shift angle of the primary active bridge to the target inner phase-shift angle,
wherein during control of the primary active bridge, the inner phase-shift angle is adjusted at least once when the drive signal is at the rising edge and at least once when the drive signal is at the falling edge.

8. The circuit control method according to claim 7, wherein the upper bridge arm comprises a forward switch and a reverse switch connected to the forward switch, the forward switch having a conducting direction pointing from the transformer to a power grid, and the reverse switch having a conducting direction pointing from the power grid to the transformer, wherein said adjusting, in response to the drive signal of the upper bridge arm being at the rising edge or the falling edge, the inner phase-shift angle of the primary active bridge to the target inner phase-shift angle comprises:
adjusting the inner phase-shift angle of the primary active bridge to the target inner phase-shift angle when a voltage of the power grid is in a positive half-cycle and the forward switch is detected to switch from an off state to an on state or from the on state to the off state; and
adjusting the inner phase-shift angle of the primary active bridge to the target inner phase-shift angle when the voltage of the power grid is in a negative half-cycle and the reverse switch is detected to switch from the off state to the on state or from the on state to the off state.

9. A circuit control method, comprising:
determining, when a bias magnet current component of an inductor of a dual-active-bridge circuit is greater than or equal to a reference value, an accumulation direction of the bias magnet current component, the dual-active-bridge circuit further comprising a primary active bridge and a transformer that are connected to the inductor, and the transformer being electrically connected to a secondary active bridge; and
adjusting a moment for an inner phase-shift angle adjustment of the primary active bridge to allow the bias magnet current component of the inductor to accumulate in a direction opposite to the accumulation direction, wherein:
the moment for the inner phase-shift angle adjustment of the primary active bridge comprises a moment at which a secondary voltage of the transformer is at a rising edge and a moment at which the secondary voltage of the transformer is at a falling edge; or
the moment for the inner phase-shift angle adjustment of the primary active bridge comprises a moment at which a drive signal of an upper bridge arm of the secondary active bridge is at the rising edge or a moment at which the drive signal of the upper bridge arm of the secondary active bridge is at the falling edge.

10. A dual-active-bridge inverter, comprising:
a dual-active-bridge circuit; and
a controller electrically connected to the dual-active-bridge circuit and configured to perform the circuit control method according to any one of claims 1 to 9.

11. A power system, comprising the dual-active-bridge inverter according to claim 10.

12. The power system according to claim 11, wherein the dual-active-bridge inverter has an input side electrically connected to a power supply assembly, and an output side electrically connected to an alternating current power grid.
